# EUROPÄISCHE PATENTSCHRIFT

(11) **EP 2 209 987 B1**
(45) Veröffentlichungstag und Bekanntmachung des Hinweises auf die Patenterteilung: **27.06.2012**
(21) Anmeldenummer: 08849137.8
(22) Anmeldetag: 24.10.2008
(51) Int. Cl.: F02M 37/22

(54) **FLÜSSIGKEITSFÜHRENDER HOHLQUERSCHNITT**
LIQUID-CONDUCTING HOLLOW CROSS-SECTION
SECTION CREUSE DE CONDUCTION DE LIQUIDES

(30) Priorität: 16.11.2007 DE 102007054770
(43) Veröffentlichungstag der Anmeldung: 28.07.2010
(73) Patentinhaber: Mahle International GmbH, 70376 Stuttgart (DE)
(72) Erfinder: BRAUNHEIM, Michael, 73033 Göppingen (DE)
(74) Vertreter: BRP Renaud & Partner
(86) Internationale Anmeldenummer: PCT/EP2008/064426
(87) Internationale Veröffentlichungsnummer: WO 2009/062833

(56) Entgegenhaltungen:
- DE-A1- 3 118 511
- DE-A1- 3 631 846
- DE-A1- 19 934 357
- DE-U1- 9 312 825
- GB-A- 2 167 827
- GB-A- 2 191 820
- GB-A- 2 342 420
- US-A- 3 368 681
- US-A- 4 477 345
- US-A1- 2007 246 411

## Beschreibung

Die vorliegende Erfindung betrifft einen flüssigkeitsführenden Hohlquerschnitt, insbesondere eine wasserführende Leitung, gemäß dem Oberbegriff des Anspruchs 1. Die Erfindung betrifft außerdem ein mit einem derartigen Hohlquerschnitt ausgestattetes Kraftstofffilter.

Aus der US 4,477,345 ist ein gattungsgemäßer Wasser führender Hohlquerschnitt bekannt, in dem zumindest ein Verdrängerelement vorgesehen ist, welches den für die Flüssigkeit zur Verfügung stehenden freien Querschnitt verringert, und der Teil einer Wasserabführleitung eines Kraftstofffilters ist.

Weitere Wasser führende Hohlquerschnitte in Kraftstofffiltern sind beispielsweise aus der US 3,368,681, der DE 31 18 511 A1 und der DE 36 31 846 A1 bekannt.

Hohlquerschnitte, welche Flüssigkeiten führen bzw. leiten, sind hinlänglich, beispielsweise als Wasserleitungen, bekannt. Zeigen die in dem Hohlquerschnitt geführten Flüssigkeiten temperaturabhängige Volumenänderungen, das heißt besteht bei der ihm Hohlquerschnitt geführten Flüssigkeit die Gefahr eines Erstarrens bzw. Gefrierens beim Unterschreiten bestimmter Temperaturen, so kann dieser Übergang vom flüssigen in den festen Aggregatszustand, welcher üblicherweise mit einer Volumenvergrößerung verbunden ist, zu einem Sprengdruck innerhalb des Hohlquerschnitts führen, der insbesondere im Fall von Wasser problemlos ein Sprengen des Hohlquerschnitts bewirken kann, und zwar dann, wenn der Hohlquerschnitt die Volumenvergrößerung der erstarrenden Flüssigkeit nicht durch eine Änderung seiner Größe ausgleichen kann. Der Witterung ausgesetzte Hohlquerschnitte, beispielsweise in einem Kraftfahrzeug, welche eine gefriergefährdete Flüssigkeit beinhalten, müssen daher, beispielsweise mittels eines Frostschutzmittels, vor einem Gefrieren der Flüssigkeit und damit vor einer Beschädigung des Hohlquerschnitts geschützt werden. Ist dies aus hygienischen Gründen, beispielsweise bei einer Trinkwasserleitung, nicht möglich, so muss diese auf andere Weise, beispielsweise durch ein Verlegen unterhalb der Frostgrenze, vor einem Durchfrieren geschützt werden. Besonders in diesem Fall besteht jedoch grundsätzlich die Möglichkeit eines Schadens, sofern die Flüssigkeit, hierbei insbesondere das Wasser, im Hohlquerschnitt gefriert.

Die vorliegende Erfindung beschäftigt sich mit dem Problem, einen gattungsgemäßen flüssigkeitsführenden Hohlquerschnitt konstruktiv so auszugestalten, dass ein Erstarren bzw. Gefrieren einer im Hohlquerschnitt geführten Flüssigkeit nicht zu einer Beschädigung des Hohlquerschnitts führen kann.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, in einem eine gefriergefährdete Flüssigkeit führenden Hohlquerschnitt ein Verdrängerelement vorzusehen, welches einen für die Flüssigkeit zur Verfügung stehenden freien Querschnitt verringert. Soll der der Flüssigkeit zur Verfügung stehende Transportquerschnitt dabei gleich sein wie bei einem herkömmlichen, das heißt ohne Verdrängerelement ausgestatteten Hohlquerschnitt, so muss der Hohlquerschnitt an sich größer ausgebildet werden. Diese querschnittsmäßig größere Ausbildung des Hohlquerschnitts bewirkt eine Zunahme des Umfangs sowie einer Innenmantelfläche des Hohlquerschnitts. Da bei gleichem angenommenem Volumen der Flüssigkeit eine gleiche Volumenzunahme derselben bei einem Gefrieren erfolgt, verteilt sich die erforderliche Anpassung der Größe des Hohlquerschnitts mit Verdrängerelement an die Volumenzunahme der erstarrenden Flüssigkeit auf eine größere Innenmantelfläche als bei einem herkömmlichen, kleineren Hohlquerschnitt. Die geringere Änderung der Größe pro Oberfläche bedeutet eine geringere Dehnung im Werkstoff bei dem erfindungsgemäßen Hohlquerschnitt. Da die Spannung in Werkstoff proportional zur Dehnung ist, ist auch die Spannung im Werkstoff bei dem erfindungsgemäßen Hohlquerschnitt reduziert gegenüber der bei herkömmlichen Hohlquerschnitten. Dabei wird der Verdrängerkörper bezüglich seines Volumens vorzugsweise derart gewählt, dass die beim Durchfrieren der Flüssigkeit entstehende und auf den Hohlquerschnitt wirkende Spannung von Letzterem problemlos aufgenommen werden kann. Eine Beschädigung des Hohlquerschnitts beim Gefrieren der in diesem geführten Flüssigkeit ist somit zuverlässig auszuschließen. Darüber hinaus ist ein derartiges Verdrängerelement konstruktiv einfach und kostengünstig herzustellen, sodass nahezu beliebige Hohlquerschnitte mit ebenfalls nahezu beliebigen darin geführten Flüssigkeiten frostsicher gemacht werden können. Dies ist insbesondere im Hinblick auf Hohlquerschnitte von besonderem Vorteil, bei welchen ein Platzen derselben, hervorgerufen durch ein Gefrieren der darin transportierten Flüssigkeiten, unbedingt ausgeschlossen werden muss. Ein Beispiel hierfür kann eine wasserabführende Leitung aus einem Dieselkraftstofffilter sein, welche bei einem Bersten dazu führen würde, dass auch Dieselkraftstoff in die Umgebung gelangt und diese dadurch verschmutzt. Selbstverständlich ist dabei der Begriff Hohlquerschnitt dehnbar auszulegen, sodass als Hohlquerschnitte auch Behälter, Leitungssysteme etc. verstanden werden können.

Bei einer weiteren vorteilhaften Ausführungsform der erfindungsgemäßen Lösung ist das Verdrängerelement reversibel zusammendrückbar ausgebildet. Dies bietet nochmals einen Vorteil, da die beim Gefrieren der Flüssigkeit hervorgerufene Volumenzunahme durch eine Volumenreduzierung des Verdrängerelements aufgenommen werden kann. Überschreitet die Flüssigkeit im Hohlquerschnitt deren Schmelzpunkt, so kann sich das reversible, kompressible Verdrängerelement wieder in seine ursprüngliche Größe ausdehnen. Als Beispiel für derartige reversibel zusammendrückbare Verdrängerelemente können beispielsweise ballonartige Verdrängerelemente angeführt werden, welche ein Gasvolumen in sich einschließen.

Zweckmäßig weist das wenigstens eine Verdrängerelement einen Kreisquerschnitt auf und ist koaxial in dem ebenfalls einen Kreisquerschnitt aufweisenden Hohlquerschnitt angeordnet. Dabei kann das Verdrängerelement über die gesamte axiale Länge des Hohlquerschnitts oder aber lediglich über Teilbereiche der axialen Länge vorgesehen werden, wobei die Größe des vorzusehenden Verdrängerelements abhängig von der im Hohlquerschnitt transportierten Flüssigkeit und der durch den Hohlquerschnitt aufnehmbaren Spannung beim Erstarren bzw. Gefrieren der Flüssigkeit ist. Denkbar ist dabei, dass das koaxial im zylindrischen Hohlquerschnitt angeordnete Verdrängerelement über entsprechende Stege oder Positionierelemente in seiner koaxialen Lage gehalten wird, wobei es für den physikalischen Effekt der Erfindung unerheblich ist, ob das Verdrängerelement koaxial oder exzentrisch im Hohlquerschnitt angeordnet ist. In beiden Fällen kann eine Beschädigung des Hohlquerschnitts durch ein Erstarren bzw. Gefrieren der Flüssigkeit zuverlässig vermieden werden. Weitere wichtige Merkmale und Vorteile der Erfindung ergeben sich aus den Unteransprüchen, aus den Zeichnungen und aus der zugehörigen Figurenbeschreibung anhand der Zeichnungen. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch:
- Fig. 1: einen Querschnitt durch einen Hohlquerschnitt mit einem erfindungsgemäßen Verdrängerelement,
- Fig. 2: eine Darstellung wie in Fig. 1, jedoch mit einem anders ausgestatteten Verdrängerelement,
- Fig. 3a-f: unterschiedliche Ausführungsformen von in dem Hohlquerschnitt angeordneten Verdrängerelementen.

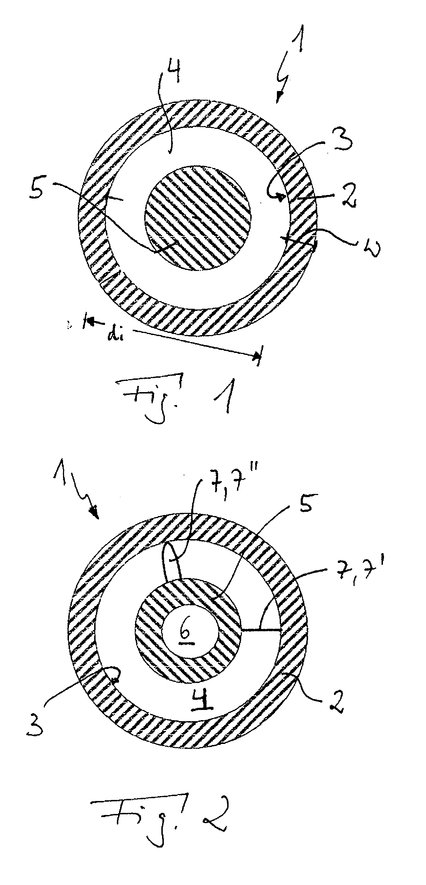

Entsprechend Fig. 1 weist ein erfindungsgemäßer flüssigkeitsführender Hohlquerschnitt 1 einen Mantel 2 mit einer Innenmantelfläche 3 auf. Die im Hohlquerschnitt 1 transportierte Flüssigkeit 4 zeigt dabei eine temperaturabhängige Volumenänderung, insbesondere kann die Flüssigkeit 4 erstarren bzw. gefrieren, das heißt bei Unterschreitung einer bestimmten Temperatur von einem flüssigen in einen festen Aggregatszustand mit Volumenvergrößerung wechseln. Die Flüssigkeit 4 kann beispielsweise Wasser sein, wobei in diesem Fall der Hohlquerschnitt 1 eine Wasserleitung darstellt. Erfindungsgemäß ist nun in dem Hohlquerschnitt 1 zumindest ein Verdrängerelement 5 vorgesehen, welches den für die Flüssigkeit 4 zur Verfügung stehenden freien Querschnitt, welcher gemäß den Fig. 1 und 2 ohne Schraffur dargestellt ist, verringert. Dabei weist das Verdrängerelement 5 einen Kreisquerschnitt auf und ist koaxial in dem ebenfalls einen Kreisquerschnitt aufweisenden Hohlquerschnitt 1 angeordnet. Dabei stell das einen Kreisquerschnitt aufweisende Verdrängerelement 5 lediglich eine mögliche Ausführungsform dar, so dass dieses selbstverständlich auch einen komplexen, beispielsweise nicht runden Querschnitt aufweisen kann und in einem runden oder komplexen (nicht runden) Hohlquerschnitt 1 angeordnet ist.

Durch den Einsatz des Verdrängerelements 5 in den Hohlquerschnitt 1 muss ein Innendurchmesser dᵢ des Hohlquerschnitts 1 größer sein als bei einer vergleichbaren Leitung ohne Verdrängerelement 5, um den gleichen Durchflussquerschnitt bei beiden Leitungen zu erhalten. Durch den vergrößerten Innendurchmesser dᵢ steigen auch der Innenumfang der Innenmantelfläche 3 sowie der Außenumfang des Hohlquerschnitts 1. Erfolgt nun ein Übergang der Flüssigkeit 4 von einem flüssigen in einen festen Zustand, wie dies beispielsweise beim Gefrieren von Wasser erfolgt, so ist zwar die Volumenzunahme gleich groß wie bei einem Hohlquerschnitt 1 ohne Verdrängerelement 5, aufgrund des vergrößerten Innenumfangs der Innenmantelfläche 3 steht jedoch mehr Fläche zur Verfügung, um sich an die Volumenzunahme der erstarrenden Flüssigkeit anpassen zu können. Geht man beim Gefrieren einer Flüssigkeit 4 mit gleichem Volumen von einer gleichen Volumenänderung aus, so ist wegen der größeren Fläche die im Mantel 2 wirkende Spannung σ [N/mm²] deutlich kleiner, wodurch bei einem erfindungsgemäßen Hohlquerschnitt 1 ein Bersten des Mantels 2 und damit ein Undichtwerden des Hohlquerschnitts 1 eher vermieden bzw. gänzlich ausgeschlossen werden kann.

Selbstverständlich ist dabei auch denkbar, dass das Verdrängerelement 5 keinen - wie in Fig. 1 dargestellt - Vollquerschnitt aufweist, sondern einen vorzugsweise mit Gas gefüllten Hohlraum 6 umschließt. Ein derartiges Verdrängerelement 5 ist dabei deutlich leichter ausgebildet als ein vergleichbares Verdrängerelement 5 mit einem Vollquerschnitt. Bei einem Verdrängerelement 5, wie es in Fig. 2 dargestellt ist, ist zudem denkbar, dass dieses reversibel zusammendrückbar ist und dadurch beim Erstarren bzw. Gefrieren der Flüssigkeit 4 durch eine Volumenverminderung die Volumenvergrößerung der gefrierenden bzw. erstarrenden Flüssigkeit 4 aufzunehmen vermag. In diesem Fall könnte eine Wandstärke w des Mantels 2 dünner ausgebildet sein.

Selbstverständlich ist die Bezeichnung Hohlquerschnitt 1 rein exemplarisch zu verstehen, sodass es sich bei den gezeichneten Hohlquerschnitten 1 auch um anders geartete Leitungssysteme, Behälter etc. handeln kann. Allen erfindungsgemäßen Hohlquerschnitten 1 ist dabei jedoch gemein, dass durch das Vorsehen des Verdrängerelements 5 die Gefahr von Frostschäden, insbesondere das Bersten des Mantels 2 des Hohlquerschnitts 1 verringert bzw. vorzugsweise gänzlich ausgeschlossen werden kann.

Gemäß Fig. 2 weist das wenigstens eine Verdrängerelement 5 zumindest ein Positionierelement 7 auf, über welches es an der Innenmantelfläche 3 des Mantels 2 gehalten ist. Dabei kann das Positionierelement 7 beispielsweise als Steg 7' oder Positioniernase 7" ausgebildet sein. Gemäß der Fig. 2 hält das Positionierelement 7 das Verdrängerelement 5 in einer koaxialen Lage zum Hohlquerschnitt 1. Für die Funktionsweise des erfindungsgemäßen Hohlquerschnitts ist jedoch eine koaxiale Positionierung des Verdrängerelements 5 nicht erforderlich.

Durch das erfindungsgemäße Verdrängerelement 5 können auch Hohlquerschnitte 1 frostsicher gemacht werden, welche bei einem Bersten ein Austreten der Flüssigkeit 4 in die Umgebung und damit eine Kontamination derselben zur Folge hätte. Eine derartige Kontamination könnte beispielsweise erfolgen, wenn der Hohlquerschnitt 1 als Wasserablauf eines Kraftstofffilters ausgebildet ist. Würde durch ein Gefrieren des Wassers hierbei der Mantel 2 des Hohlquerschnitts 1 brüchig, so könnte ebenfalls im abgeschiedenen Wasser mitgeführter Kraftstoff in die Umgebung gelangen und diese verschmutzen. Letzteres ist selbstverständlich unbedingt zu vermeiden, wodurch der erfindungsgemäße Hohlquerschnitt 1 insbesondere in einem derartigen Anwendungsgebiet zum Einsatz gelangen kann.

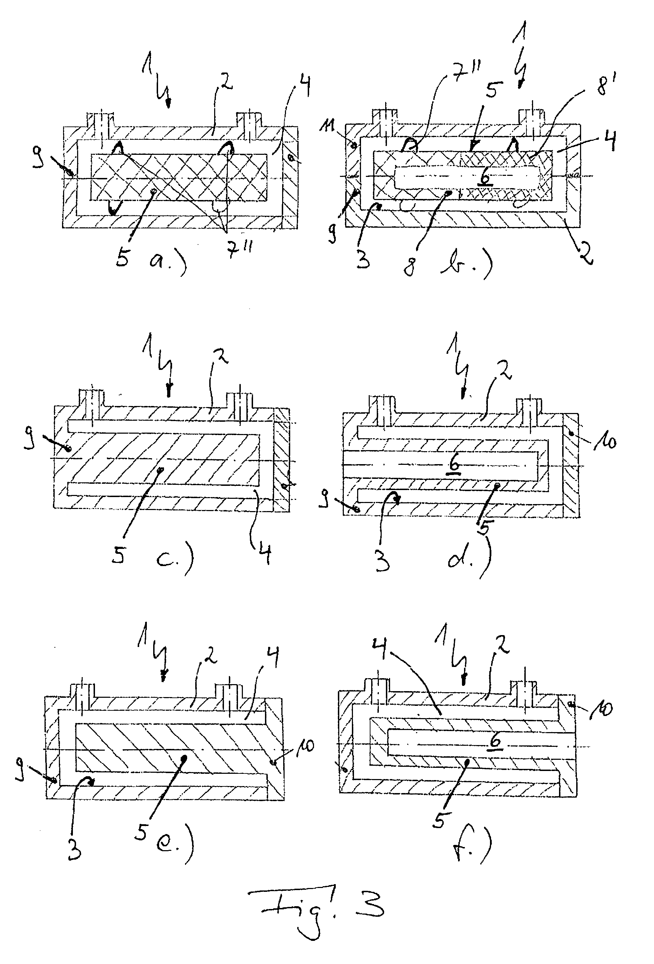

Gemäß den Fig. 3a bis 3f sind unterschiedlichste Ausführungsformen von Verdrängerelementen 5 dargestellt, wobei gemäß Fig. 3a, c und e das Verdrängerelement 5 als Vollquerschnitt ausgebildet ist. Über die Positioniernasen 7" werden beispielsweise die Verdrängerelemente 5 gemäß den Fig. 3 und 3b in Position gehalten.

Im Vergleich zu Fig. 3a weist das Verdrängerelement 5 gemäß der Fig. 3b einen Hohlraum 6 auf und ist zudem aus zwei Halbschalen 8 und 8' zusammengesetzt, beispielsweise zusammengeschraubt bzw. zusammengeschweißt. Denkbar ist hierbei, dass es sich bei den Materialien der beiden Halbschalen 8 und 8' um dieselben Materialien oder um unterschiedliche Materialien handelt, insbesondere ist vorstellbar, dass eine der beiden Halbschalen 8 oder 8' aus einem kompressiblen Material ausgebildet ist. Der Hohlquerschnitt 1 ist in diesem Ausführungsbeispiel gebildet durch die Hohlquerschnittwand 9 und 11.

Gemäß den Fig. 3c und 3d ist das Verdrängerelement 5 einstückig mit einer Hohlquerschnittwand 9 ausgebildet bzw. einstückig mit dieser ausgeführt. Das Verdrängerelement 5 gemäß der Fig. 3d weist darüber hinaus einen Hohlraum 6 auf, der anders wie der Hohlraum 6 gemäß dem in der Fig. 3b dargestellten Verdrängerelement 5 in die Umgebung, das heißt nach außen offen ausgebildet ist.

Gemäß den Fig. 3e und 3f ist das Verdrängerelement 5 einstückig mit einem Deckel 10 des als Behälter ausgebildeten Hohlquerschnitts 1 ausgebildet. Der Hohlraum 6 des Verdrängerelements 5 nach der Fig. 3f ist dabei ebenfalls nach au-βen offen, wogegen das Verdrängerelement 5 gemäß der Fig. 3e als Vollprofil, das heißt ohne Hohlraum 6 ausgebildet ist.

Durch das erfindungsgemäße Verdrängerelement 5 ist es möglich, unterschiedlichste flüssigkeitsführende Hohlquerschnitte 1 frostsicher zu machen und dadurch ein Austreten der Flüssigkeit 4 auch bei starkem Frost sicher ausschließen zu können. Dies ist insbesondere dort von Vorteil, wo in dem Hohlquerschnitt 1 Flüssigkeiten 4 transportiert werden, welche bei einem Nachaußengelangen die Umgebung kontaminieren würden.

## Patentansprüche

1. Wasser führender Hohlquerschnitt (1),
- in dem zumindest ein Verdrängerelement (5) vorgesehen ist, welches den für die Flüssigkeit (4) zur Verfügung stehenden freien Querschnitt verringert, und
- der Teil einer Wasserabführleitung eines Dieselkraftstofffilters und das Verdrängerelement (5) einstückig mit einer Hohlquerschnittwand (9) ausgebildet und/oder einstückig mit dieser ausgeführt ist,
**dadurch gekennzeichnet,**
**dass** das wenigstens eine Verdrängerelement (5) einen Kreisquerschnitt aufweist und koaxial in und radial beabstandet zu dem ebenfalls einen Kreisquerschnitt aufweisenden Hohlquerschnitt (1) angeordnet ist.

2. Hohlquerschnitt nach Anspruch 1,
**dadurch gekennzeichnet,**
**dass** das Verdrängerelement (5) als Vollprofil ausgebildet ist.

3. Hohlquerschnitt nach Anspruch 1,
**dadurch gekennzeichnet,**
**dass** das Verdrängerelement (5) als Hohlprofil ausgebildet ist, wobei eine Verbindung zwischen einem Hohlraum (6) im Verdrängerelement (5) und der Umgebung vorgesehen sein kann.

4. Hohlquerschnitt nach einem der Ansprüche 1 bis 3,
**dadurch gekennzeichnet,**
**dass** das Verdrängelement (5) reversibel zusammendrückbar ist.

5. Kraftstofffilter, insbesondere ein Dieselkraftstofffilter, zur Ausscheidung von im Kraftstoff mitgeführten Wasseranteilen, mit einem das abgeschiedene Wasser abführenden Hohlquerschnitt (1) nach einem Ansprüche 1 bis 4.

## Claims

1. A water conducting hollow cross-section (1), whereby
- in the hollow cross-section (1) at least one displacement element (5) is provided, which reduces the free cross-section available for the liquid (4),
- the hollow cross-section (1) is part of a water discharge line of a diesel fuel filter, and the displacement element (5) is designed as one piece with a hollow cross-section wall (9) or formed as one piece with the same,
**characterized in**
**that** the at least one displacement element (5) has a circular cross-section and is arranged coaxially an radially disposed in the hollow cross-section (1) which also has a circular cross-section.

2. The hollow cross-section according to claim 1,
**characterized in**
**that** the displacement element (5) is formed as a solid profile.

3. The hollow cross-section according to claim 1,
**characterized in**
**that** the displacement element (5) is formed as a hollow profile, wherein a connection can be provided between a hollow space (6) within the displacement element (5) and the environment.

4. The hollow cross-section according to any one of the claims 1 to 3,
**characterized in**
**that** the displacement element (5) is reversibly compressible.

5. A fuel filter, in particular a diesel fuel filter, for separating water parts carried along in the fuel, with a hollow cross-section (1) according to any one of the claims 1 to 4 which discharges the separated water.

## Revendications

1. Section creuse de conduction d'eau (1),
- dans laquelle est prévu au moins un élément déplaceur (5) qui réduit la section libre disponible pour le liquide (4), et
- qui fait partie d'une conduite d'évacuation d'eau d'un filtre à gasoil, et ledit élément déplaceur (5) est formé d'une seule pièce avec une paroi de la section creuse (9) et/ou est réalisé d'une seule pièce avec celle-ci,
**caractérisée par le fait que** ledit au moins un élément déplaceur (5) présente une section circulaire et est agencé de façon coaxiale dans et de manière à être espacé radialement de ladite section creuse (1) présentant, elle aussi, une section circulaire.

2. Section creuse selon la revendication 1, **caractérisée par le fait que** ledit élément déplaceur (5) est réalisé comme profilé plein.

3. Section creuse selon la revendication 1, **caractérisée par le fait que** ledit élément déplaceur (5) est réalisé comme profilé creux, dans laquelle une liaison peut être prévue entre un espace creux (6) dans ledit élément déplaceur (5) et l'environnement.

4. Section creuse selon l'une quelconque des revendications 1 à 3, **caractérisée par le fait que** ledit élément déplaceur (5) peut être comprimé de manière réversible.

5. Filtre à carburant, en particulier un filtre à gasoil, pour la séparation de parts d'eau entraînées dans le carburant, comprenant une section creuse (1) évacuant l'eau séparée, selon l'une quelconque des revendications 1 à 4.
